# EUROPEAN PATENT SPECIFICATION

(11) **EP 2 785 916 B1**
(45) Date of publication and mention of the grant of the patent: **06.01.2016**
(21) Application number: 13779752.8
(22) Date of filing: 26.09.2013
(51) Int. Cl.: D21H 27/18

(54) **TRANSPARENT SURFACE PROTECTION LAYER**
TRANSPARENTE OBERFLÄCHENSCHUTZSCHICHT
COUCHE TRANSPARENTE DE PROTECTION DE SURFACE

(30) Priority: 10.10.2012 DE 102012109660
(43) Date of publication of application: 08.10.2014
(73) Proprietor: Center for Abrasives and Refractories Research & Development C.A.R.R.D. GmbH, 9524 Villach (AT)
(72) Inventor: DIDAVIDE, Maria, Cristina, CH-6260 Reiden (CH); KUNZ, Reiner, 79725 Laufenburg (DE)
(74) Representative: Margue, Robert Germain
(86) International application number: PCT/EP2013/070142
(87) International publication number: WO 2014/056729

(56) References cited:
- EP-A1- 0 472 036
- EP-A1- 2 370 270
- EP-B1- 1 339 545
- US-A- 3 928 706
- US-A- 6 106 654

## Description

The present invention relates to a transparent surface protection layer on the basis of synthetic resin comprising transparent solid particles, which are incorporated into the synthetic resin matrix and which encompass a Mohs hardness of at least 4, to a method for the production thereof as well as to the use thereof.

It is generally known to seal surfaces of pieces of furniture, floors, ceramics or other articles of daily use and to thus protect them against wear. Duroplastic, thermoplastic or elastomer plastics, which can be hardened under the influence of temperature or irradiation, are often used for this purpose as matrix materials. Melamine resins, urea resins, phenolic resins, acrylic resins, epoxy resins, polyester resins, aminoplasts, polyurethanes as well as mixtures of these plastics are in particular suitable as heat and/or irradiation-hardenable synthetic resins or coating systems, respectively.

In the past, attempts were made successfully to improve the wear resistance of such surface coatings by incorporating hard material particles into the synthetic resin matrix.

US 3,928,706 A thus describes the production of wear resistant decorative layers, which are made up of a core paper, a decorative paper, a wear layer and an overlay paper. The wear layer of a heat-hardenable synthetic resin comprising hard materials, which are finely distributed therein and which encompass a Mohs hardness of at least 7, is either applied onto the surface of the decorative or of the overlay paper. All three papers are impregnated with a heat-hardenable synthetic resin and are processed to form a uniform laminate in the usual manner, in that they are pressed between highly-polished pressing plates at temperatures of approx. 150°C.

EP 0 519 242 A1 describes a wear protection layer of particular clearness and brilliance, which is obtained by incorporating hard materials, which are coated with silane.

The afore-mentioned methods, however, were associated with the problem that the processing of such layers by pressing with highly-polished pressing plates led to a considerable wear of the pressing plates in response to the contact with the hard material particles.

It was possible to solve this problem in that glass spheres were preferably installed into the matrix in addition to the hard materials, whereby it was possible to reduce the pressing plate wear, without thereby reducing the wear resistance of the coating too much. Such methods are described in EP 1 339 545 B1, in WO 2008/128702 A1 and in WO 2010/075922 A1. It was possible to solve some of the wear problems for surface coatings with synthetic resin with the help of the compositions described in the above-cited documents, whereby it was possible in particular to reach a high abrasion resistance.

Different mechanical stresses of the surface, however, also lead to different wear mechanisms, wherein a differentiation is made between the abrasion resistance, the scratch resistance and the scrub resistance.

The abrasion resistance, which is evaluated according to the so-called Taber method, refers to the rough wear of surfaces, as it occurs for example in the floor area in public buildings or industrial plants. During the test, the resistance of the cover layer against scrubbing through is determined. In response to the test, the abrasion is reached in that a test specimen rotates under stressed, cylindrical friction wheels, which are covered with a defined emery paper. The number of rotations, which is necessary up to a predetermined degree of the abrasion, is measured.

For this test according to DIN EN 13329, test specimens with a size of approximately 100 mm x 100 mm are removed from a laminate floor element and are divided into 4 quadrants by means of a marker. The surface of the test specimen is processed with the help of two friction wheels, which are covered with a defined emery paper, under accurately defined conditions (pressure, rotations, etc.), wherein the strips of emery paper are in each case replaced after 200 rotations. The test is continued until a so-called initial abrasion point (IP) has been reached. This is the point, at which a decorative printing has been rubbed through for the first time in a clearly recognizable manner and at which the bottom layer is exposed in three of the four quadrants. Laminate floors are divided into abrasion classes AC-1 to AC-5 in this manner, which corresponds to an IP value of ≥ 900 to ≥ 6000.

The scratch resistance refers to a less rough wear, which has an effect on the outward appearance of surface protection layers. A high scratch resistance signifies that an optically excellent appearance remains for a long time in response to a corresponding stress. The test of scratch resistance is carried out by means of the so-called Martindale test according to DIN EN 16094. A friction material is thereby moved in a translatory manner under a defined stress against a test specimen in the form of a Lissajous figure, which is formed by means of the perpendicular overlapping of two sinusoidal oscillations, the extreme states of which are a circle and a straight line, and which represents the course of movement of the friction plate. The test specimen holder, which accommodates the friction material, can be rotated freely about its axis, which is arranged perpendicular to the test specimen plane. The stressing of the test specimen by the friction material takes place up to a predetermined number of cycles. A nonwoven material (Scott Brite 3M CF-HP 7440; Scotch Brite 3M CF-HP 7447), which is coated with Al₂O₃ particles, is used as friction material. The evaluation is carried out via a measurement of the brilliance change or a classification according to scratch images.

The scrub resistance refers to the wear, which occurs in response to a low stressing of the surface, as is the case in response to the cleaning of surfaces, for example. Contrary to the two above-described test methods for the abrasion resistance and the scratch resistance, there are no established tests yet for the determination of the scrub resistance, but test methods, which are based on the two above-described tests, are used in particular at the manufacturers of wood and laminate floors. In the context of the present application, the scrub resistance was thus determined in that a flat impact surface of a 1 kg hammer, which was coated with steel wool of grade 1, is moved back and forth without additional pressure across the surface, which is to be tested. After 10 strokes, a first optical assessment of the surface is made by means of the scrub image. This process is repeated up to three times, so that a total of 30 strokes are carried out. Due to the fact that the scrub marks, which are generated in the case of this method, run linearly, they are difficult to identify on microscopic images, so that a visual assessment is made according to wear stages, which is additionally supported by means of microscopic images. In stage 0, no visible changes can be identified, stage 1 shows a few scrub marks, which can be seen only vaguely, stage 2 shows several clearly visible scrub marks, many clearly visible scrub marks can be identified in stage 3, the first appearance of an abrasion-like wear can be seen in stage 4 and a large-area abrasion is clearly visible in stage 5.

Abrasion resistant decorative laminates, which encompass an excellent abrasion resistance and scratch resistance, are described in EP 1 719 638 B1, wherein the coating comprises a binding agent matrix comprising first material particles having a particle size in the range of between 3 µm and 8 µm and second mineral particles having a particle size of below 1.0 µm.

EP 1 719 638 B1 describes a wood material plate, the surface of which encompasses a decorative layer, which is covered by a transparent resin layer, which comprises particles having a high stability, for example corundum, and in addition pyrogenic silica in a particle size of up to 100 nm to increase the abrasion resistance. In response to the testing of the scratch resistance according to Martindale, such wood material plates show only a small loss of shine and only a few visible scratches.

More in-depth examinations of the wear mechanisms of decorative layers have shown that the scratch resistance, which is based on the normal wear in day-to-day operations, and the scrub resistance, which characterizes a wear in response to a low stressing of the surface, as it appears in response to cleaning or scouring of surfaces, are characterized by different wear mechanisms, so that measures, which guarantee a high scratch resistance, do not automatically bring about a high scrub resistance. The same applies to the abrasion resistance. It also turned out here that measures, which bring about a high abrasion resistance, do not automatically also guarantee a high scratch resistance or scrub resistance.

The problem is that the state of the art does not disclose a method or corresponding information relating to measures for obtaining a surface protection layer, which encompasses a similar high abrasion resistance, a high scratch resistance and a high scrub resistance.

The problem is solved by means of a transparent surface protection layer comprising the features of claim 1. Advantageous embodiments and further developments are the subject matter of the corresponding subclaims.

Numerous attempts to optimize the abrasion resistance, scratch resistance and scrub resistance of surface protection layers with one another, without increasing the viscosity of the used resin to the extent that the processability suffers, and without the transparency of the desired layer to get lost, have shown that optimal and satisfactory results are reached for all three of the above-mentioned characteristics, when transparent solid particles, comprising at least three different grain size fractions and encompassing a Mohs hardness of at least 4, are incorporated into the matrix of a surface protection layer on the basis of synthetic resin, wherein the individual grain size fractions in each case encompass a monomodal grain size distribution and the solid particles are present as a trimodal grain size distribution comprising a coarse fraction, an medium fraction and a fine fraction.

The coarse fraction thereby comprises an individual or two adjacent granulations comprising the grain sizes F150 to F280 according to FEPA standard, the medium fraction comprises an individual or two adjacent granulations comprising the grain sizes F320 to F1200 according to FEPA standard, and the fine fraction comprises a granulation comprising an average grain size of d₅₀ of between 0.1 µm and 2 µm.

In the case of an advantageous embodiment of the present invention, the medium fraction encompasses an average grain size d₅₀ of between 5% and 35% and the fine fraction encompasses an average grain size d₅₀ of between 0.3% and 3%, in each case based on the average grain size d₅₀ of the coarse fraction.

A further advantageous embodiment of the present invention provides for the average grain size d₅₀ of the coarse fraction to be between 30 µm and 100 µm, for the average grain size d₅₀ of the medium fraction to be between 2 µm and 20 µm, and for the average grain size d₅₀ of the fine fraction to be between 0.2 µm and 0.5 µm.

Preferably, the transparent solid particles are materials chosen from the group consisting of α-aluminum oxide, fused corundum, sintered corundum, fully annealed aluminum oxides, sol-gel corundum, aluminum silicates, glass spheres, silica sand and mixtures thereof. The individual grain size fractions can thereby also encompass different solid particles and can consist of mixtures of solid particles. An advantageous embodiment of the present invention provides for the coarse fraction to consist of α-aluminum oxide or fused corundum or a mixture of α-aluminum oxide or fused corundum with up to 30% by weight of glass spheres, for the medium fraction to consist of α-aluminum oxide, fused corundum, fully annealed aluminum oxides, sol-gel corundum or the mixtures thereof and for the fine fraction to consist of α-aluminum oxide, fused corundum, sintered corundum, fully annealed aluminum oxides, sol-gel corundum, aluminum silicates, glass spheres, quartz sand or the mixtures thereof. In general, the solid particles of the coarse fraction and of the medium fraction preferably encompass a Mohs hardness of ≥ 6, particularly preferably ≥ 8. Particularly good results are obtained when all three grain size fractions consist of α-aluminum oxide, fused corundum or fully annealed aluminum oxides.

Advantageously, the total quantity of incorporated solid particles is between 5% by vol. and 70% by vol., based on the entire surface protection layer and is thereby approx. between 2 g/m² and approx. 100 g/m². Expressed in % by weight, the portion of incorporated solid particles is preferably between 10% by weight and 80% by weight, also based on the entire surface protection layer.

It is known to improve the transparency of wear protection layers, into which transparent solid particles are incorporated, by means of a chemical surface treatment of the solid particles with a coupling agent. A preferred embodiment of the present invention thus provides for the solid particles to be subjected to a chemical surface treatment with an organic or inorganic coupling agent prior to the incorporation into the plastic matrix, wherein the coupling agent is preferably a silane, in particular an organosilane, such as, e.g., an aminoalkylalkoxysilane or an aminoalkylsilane. The portion of silane is thereby typically between 0.001% by weight and 5% by weight, based on the total portion of solid particles.

Subject matter of the present invention is also a method for producing a transparent surface protection layer of the above-described type, wherein an overlay paper is initially core-impregnated with a first resin suspension. In a second step, a second resin suspension is applied onto the front side of the wet overlay paper, wherein the second resin suspension comprises the coarse fraction of the transparent solid particles having a Mohs hardness of at least 4. A third resin suspension is subsequently applied onto the rear side of the overlay paper, wherein the third resin suspension comprises the medium fraction and the fine fraction of the transparent solid particles having a Mohs hardness of at least 4. The overlay paper coated in this manner is dried to a residual moisture content of approx. 6% and is then applied with its side, which includes the coarse fraction of the transparent solids, onto a decorative paper, which is core-impregnated with the first resin suspension and which is dried. The decorative paper, which is overlaid with the coated overlay paper, is pressed onto a wood fiber board, wherein the uppermost layer of the surface protection layer, which has been formed in this manner, comprises the medium fraction and the fine fraction of the transparent solid particles.

In the case of an alternative method for producing a surface protection layer according to the invention, a decorative paper is core-impregnated with a first resin suspension in a first step and at least one further resin suspension, which comprises at least one grain fraction of the transparent solid particles having a Mohs hardness of at least 4, is subsequently applied onto the wet decorative paper. In the event that the second resin suspension includes all of the grain size fractions, which are to be incorporated, the coated decorative paper can subsequently be dried directly to a residual moisture content of approx. 6% and can be pressed onto a wood fiber board.

In the case of an advantageous alternative of the alternative method, the at least three grain size fractions of the transparent solid particles are applied onto the decorative paper in a plurality of steps, wherein different grain size fractions of the transparent solid particles are used for each individual step. The order of the application of the plurality of resin suspensions, which comprise different grain size fractions of the transparent solid particles, thereby takes place in such a manner that the uppermost layer of the surface protection layer, which was obtained in this manner, comprises the fine fraction of the transparent solid particles.

The surface protection layer according to the invention is used in particular for wear resistant floor coverings, parquet floors, floor laminates, furniture surfaces or work plates.

The present invention will be explained in detail below by means of several selected examples, wherein resin suspensions A and B comprising the following compositions were used.

**Resin suspension A**

| Quantity (g) | Compound | Identification, Manufacturer |
|---|---|---|
| 100 | melamine resin | MF Dynea Prefère, 70 0562L, Dynea, A-Krems |
| 5 | monoethyl glycol | MEG, Roth |
| 0.86 | hardener | MH 188, Melatec, CH-Zug |
| 0.19 | surfactant | MN 49/S, Melatec, CH-Zug |
| 0.05 | separating agent | MT 673/SP, Melatec, CH-Zug |

**Resin suspension B**

| Quantity (g) | Compound | Identification, Manufacturer |
|---|---|---|
| 100 | melamine resin | MF Dynea Prefère, 70 0562L, Dynea, A-Krems |
| 6 | monoethyl glycol | MEG, Roth |
| 0.93 | hardener | MH 188, Melatec, CH-Zug |
| 0.6 | surfactant | MN 200/B, Melatec, CH-Zug |
| 0.05 | separating agent | MT 673/SP, Melatec, CH-Zug |

Different grain size fractions of white aluminum oxide, which was partially treated with silane, identified as ALODUR^{®} ZWSK-ST, ALODUR^{®} ZWSK and ALODUR^{®} WSK by Treibacher Schleifmittel GmbH having a Mohs hardness of 9 as well as glass spheres by Swarco having a Mohs hardness of approx. 6 were used as solid particles. The grain sizes of the respective utilized solid particles are summarized in Table 1 below.

**Table 1**

| Name | Base material | Grain size range | Average grain size |
|---|---|---|---|
| ZWSK-ST F180 | white aluminum oxide | FEPA F180 53-90 µm | 75 µm |
| ZWSK-ST F240 | | FEPA F240 28-75 µm | 44.5 µm |
| ZWSK F280 | | FEPA F280 22-59 µm | 36.5 µm |
| ZWSK F500 | | FEPA F500 5-25 µm | 12.8 µm |
| ZWSK F800 | | FEPA F800 2-14 µm | 6.5 µm |
| ZWSK F1200 | | FEPA F1200 1-7 µm | 3.0 µm |
| WSK 3000 | | 0-2 µm | 0.4 µm* |
| glass spheres | glass | 0-5 µm | 1.2 µm* |

| | | | |
|---|---|---|---|
| * **measuring instrument:** Sympatec Helos BF with wet dispersion OASIS (laser diffraction) | | | |

### Example 1 (comparison)

An overlay paper was core-impregnated with the resin suspension A. A coating of the overlay paper with suspension B, which included 33% by weight of ALODUR^{®} ZWSK-ST F180 as solid particles, was carried out subsequently. The overlay paper was dried at 145°C to a residual moisture content of 6.2% and was then placed with the grain side onto a decorative paper, which was core-impregnated with the resin suspension A and which was dried, and was subsequently pressed onto a HDF wood fiber board at 180°C for 12 seconds at a pressure of 350 N.

### Examples 2 to 8

An overlay paper was initially core-impregnated with the resin suspension A and was then coated on the front side with the resin suspension B, which included 33% by weight of ALODUR^{®} ZWSK-ST 180 as solid particles. The rear side of the overlay paper was subsequently in turn "wet-on-wet" coated with the resin suspension B, which included different quantities of solid particles of a medium and/or fine fraction. For this purpose, the quantity of surfactant in the resin suspension B was increased to 1.5 g for examples 4, 7 and 8, so as to ensure the dispersibility of the fine fraction. The differently coated overlay papers obtained in this manner were in each case dried at 145°C to a residual moisture content of 6.2% and were then placed with the front side onto a decorative paper, which was core-impregnated with the resin suspension A and which was dried, and were subsequently pressed onto a HDF wood fiber board at 180°C for 12 seconds at a pressure of 350 N. The quantities of utilized medium fraction and fine fraction of the solid particles are summarized in Table 2 below.

**Table 2**

| Example | Solid particles / percentage (in each case based on the corresponding pure resin suspension B) | | |
|---|---|---|---|
| | coarse | medium | fine |
| 0 (comparison) | - | - | - |
| 1 (comparison) | ZWSK-ST F180 33% by weight | - | - |
| 2 (comparison) | ZWSK-ST F180 33% by weight | ZWSK F500 15% by weight | - |
| 3 (comparison) | ZWSK-ST F180 33% by weight | - | WSK 3000 10% by weight |
| 4 (comparison) | - | ZWSK F500 25% by weight | WSK 3000 20% by weight |
| 5 (comparison) | ZWSK-ST F180 33% by weight | - | glass spheres 25% by weight |
| 6 (comparison) | ZWSK-ST F240 33% by weight | ZWSK F800 15% by weight | ZWSK F1200 15% by weight |
| | | | |
| 7 (invention) | ZWSK-ST F180 33% by weight | ZWSK F500 15% by weight | WSK 3000 25% by weight |
| 8 (invention) | ZWSK-ST F280 33% by weight | ZWSK F500 20% by weight | WSK 3000 20% by weight |

The evaluation of the wear figures was carried out according to the above-described methods.

The Taber value was determined according to DIN EN 13329, wherein the Taber values specified in Table 3 are in each case the average values of 4 Taber tests.

The scratch resistance was determined according to DIN EN 16094, wherein the evaluation was carried out via the scratch image and Scotch Brite 3M CF-HP 7440 was used as test medium. Ten Lissajous movements (160 cycles) were performed for each test.

To determine the scrub resistance, 4 scrub tests, which were evaluated visually (scratch images) and which were combined to form an average value in Table 3, were carried out for each example. Based on the scratch resistance test according to DIN EN 16094, six stages (0-5) were chosen for the scratch images, wherein no visible changes can be identified in stage 0. The Taber values determined in response to the wear tests, values for the scratch resistance and assessments of the scrub resistance are summarized in Table 3 below.

**Table 3**

| Example | Wear figures | | |
|---|---|---|---|
| | Taber value IP = rotations | scratch resistance classification scratch image | scrub resistance classification scratch image |
| 0 (comparison) | 600 | 4-5 | 4-5 |
| 1 (comparison) | 4,200 | 4-5 | 4-5 |
| 2 (comparison) | 4,100 | 1-3 | 4-5 |
| 3 (comparison) | 4,200 | 4-5 | 0-2 |
| 4 (comparison) | 800 | 0-2 | 0-2 |
| 5 (comparison) | 4,000 | 4-5 | 1-2 |
| 6 (comparison) | 2,300 | 1-3 | 2-3 |
| | | | |
| 7 (invention) | 4,100 | 0-2 | 0-2 |
| 8 (invention) | 2,000 | 0-2 | 0-2 |

It is known from the state of the art that the presence of a relatively coarse grain fraction of a solid material, which encompasses a certain minimum hardness, is a requirement for a high wear resistance. This is confirmed by the low Taber value of 800 for example 4, which does not encompass a coarse portion. Due to the fact that a high wear resistance is considered to be a basic requirement for a wear protection layer, which is to be developed, a coarse fraction with 33% by weight, based on the respective resin suspension B as basis, was always used in the case of all of the remaining examples. The quantity of coarse fraction was thereby maintained so as to be constant, to ensure a comparability of the obtained results. With 33% by weight, the quantity of coarse fraction was chosen such that it was possible to reach high Taber values, without the risk that the transparency of the surface protection layer is lost in response to the addition of the medium fraction and/or of the fine fraction. The grain size of the coarse fraction and the proportion thereof correlates with the level of the Taber values, which can be reached. For example, a coarse grain size F180 (example 7) having 33% by weight in the resin liquor results in 4,100 Taber, a less coarse grain size F280 (example 8) having a 33% portion in the resin liquor results in 2,000 Taber.

A laminate (example 0), which did not include any solid particles and which, as expected, encompassed a low wear resistance, scratch resistance and scrub resistance, was also measured for comparison and as reference figure. Comparative example 1 shows that neither an acceptable scratch resistance, nor a satisfactory scrub resistance is reached only with a coarse fraction on the front side of the overlay paper without an additional fine portion on the rear side. It follows from comparative example 2 that an additional portion of a medium grain fraction on the rear side of the overlay paper results in a high scratch resistance. When choosing a very fine grain size fraction as fine portion for coating the rear side of the overlay paper, as in example 3, it is surprising that a very low scratch resistance results, but a very good scrub resistance. This result is confirmed in a further test (example 5), in which glass spheres are used instead of the corundum in the fine fraction. Even though the glass spheres have a low hardness, this has only little effect on the scrub resistance. In comparative example 6, a relatively coarse abrasive grain fraction was used with ZWSK F1200 as fine fraction, whereby only an average scrub resistance was obtained.

An abrasion resistant surface comprising an optimum scrub resistance and an optimum scratch resistance is obtained in examples 7 and 8 according to the invention. In both of these cases, the surface comprises at least three different grain size fractions of solid particles, wherein the grain size fractions in each case encompass a monomodal grain size distribution and the solid particles are present as trimodal grain size distribution comprising a coarse fraction, a medium fraction and a fine fraction. The coarse fraction thereby comprises an individual or two adjacent granulations in the grain size range F150 to F280 according to FEPA standard, the medium fraction comprises an individual or two adjacent granulations in the grain size range F320 to F1200 according to FEPA standard, and the fine fraction comprises a granulation comprising an average grain size d₅₀ of between 0.1 µm and 2 µm. In example 7, optimal values are found with a grain size F180 as coarse fraction for all three criteria, which are to be examined, while the wear resistance in example 8 with the finer coarse fraction already decreases considerably, but still shows an acceptable value with 2,000 Taber.

To complete the picture, the results of further tests as well as the conclusions therefrom will be summarized in general below, without additionally explaining the individual results by means of concrete examples in more detail.

Surprisingly, it was found that surface protection layers having a high wear resistance, a good scratch resistance and a good scrub resistance can be obtained even without the use of an overlay paper. Further examples were thus produced and evaluated, in which a core-impregnated decorative paper was directly "wet-on-wet" coated and the coated decorative paper, which was dried subsequently, was pressed directly with the HDF wood fiber board.

In first tests, all of the at least three grain size fractions of the solid particles were initially applied in one layer onto the core-impregnated decorative paper, which was dried subsequently and which was then pressed onto a wood fiber board. The surface protection layers obtained in this manner encompassed good results for all three evaluation criteria.

In addition, further tests were made for the direct coating, in the case of which the solid particles were applied gradually in individual steps as individual grain size fraction or in combinations of two grain size fractions. In particular the last tests have shown that a good scrub resistance is reached in particular when the fine fraction is also included in the uppermost layer. Very good results were thus obtained, when the coarse fraction was initially applied individually onto the decorative paper in a first layer and a second layer comprising the medium fraction and the fine fraction was applied subsequently.

Comparable quantities of coarse fraction, medium fraction and fine fraction, were used in the case of the direct coatings, as in examples 7 and 8, whereby care was taken that the viscosity of the resin did not affect the processability thereof and that in particular the transparency of the surface protection layer remained.

In summary, it followed from all of the tests that a satisfactory scrub resistance is reached, when the uppermost layer of the surface protection layer according to the invention at least partially comprises the fine fraction of the transparent solid particles.

## Claims

1. A transparent surface protection layer on the basis of synthetic resin comprising transparent solid particles, which comprise at least three different grain size fractions and encompass a Mohs hardness of at least 4, which are incorporated into the synthetic resin matrix, wherein the grain size fractions in each case encompass a monomodal grain size distribution and the transparent solid particles are present together as trimodal grain size distribution comprising a coarse fraction, a medium fraction and a fine fraction,
**characterized in that**
the coarse fraction comprises an individual or two adjacent granulations comprising the grain sizes F150 to F280 according to FEPA standard, the medium fraction comprises an individual or two adjacent granulations comprising the grain sizes F320 to F1200 according to FEPA standard, and the fine fraction comprises a granulation comprising an average grain size of d₅₀ of between 0.1 µm and 2 µm.

2. The surface protection layer according to claim 1,
**characterized in that**
the medium fraction encompasses an average grain size d₅₀ of between 5% and 35% and the fine fraction encompasses an average grain size d₅₀ of between 0.3% and 3%, in each case based on the average grain size d₅₀ of the coarse fraction.

3. The surface protection layer according to claim 1 or 2,
**characterized in that**
the average grain size d₅₀ of the coarse fraction is between 30 µm and 100 µm, the average grain size d₅₀ of the medium fraction is between 2 µm and 20 µm, and the average grain size d₅₀ of the fine fraction is between 0.2 µm and 0.5 µm.

4. The surface protection layer according to one of claims 1 to 3,
**characterized in that**
the transparent solid particles are chosen from the group consisting of α-aluminum oxide, fused corundum, sintered corundum, fully annealed aluminum oxides, sol-gel corundum, aluminum silicate, glass spheres, silica sand and mixtures thereof.

5. The surface protection layer according to one of claims 1 to 4,
**characterized in that**
- the coarse fraction consists of α-aluminum oxide or fused corundum or a mixture of fused corundum or α-aluminum oxide with up to 30% by weight of glass spheres,
- the medium fraction consists of α-aluminum oxide, fused corundum, fully annealed aluminum oxides, sol-gel corundum or the mixtures thereof and
- the fine fraction consists of α-aluminum oxide, fused corundum, fully annealed aluminum oxides, aluminum silicate, glass spheres, quartz sand or the mixtures thereof.

6. The surface protection layer according to one of claims 1 to 5,
**characterized in that**
the transparent solid particles of the coarse fraction and of the medium fraction encompass a Mohs hardness of ≥ 6, particularly preferably ≥ 8.

7. The surface protection layer according to one of claims 1 to 6,
**characterized in that**
the total quantity of incorporated transparent solid particles in the synthetic resin matrix is between 5% by vol. and 70% by vol., based on the entire surface protection layer.

8. The surface protection layer according to one of claims 1 to 7,
**characterized in that**
the total quantity of incorporated transparent solid particles in the synthetic resin matrix is between 2 g/m² and 100 g/m².

9. A method for producing a surface protection layer according to one of claims 1 to 8, wherein the method comprises the steps:
- core-impregnating an overlay paper with a first resin suspension,
- applying a second resin suspension, which comprises the coarse fraction of the transparent solid particles, onto the front side of the wet overlay paper,
- applying a third resin suspension, which comprises the medium fraction and fine fraction of the transparent solid particles, to the rear side of the wet overlay paper,
- drying the coated overlay paper to a residual moisture of approx. 6%,
- applying the coated overlay paper with its side, which includes the coarse fraction of the transparent solid particles, onto a decorative paper, which is core-impregnated with the first resin suspension and which is dried and
- pressing the decorative paper, which is overlaid with the coated overlay paper, onto a wood fiber board, wherein the uppermost layer of the surface protection layer, which has been formed in this manner, comprises the medium fraction and fine fraction of the transparent solid particles.

10. The method for producing a surface protection layer according to one of claims 1 to 8, wherein the method comprises the steps:
- core-impregnating a decorative layer with a first resin suspension,
- applying at least one further resin suspension, which comprises at least one grain size fraction of the transparent solid particles, onto the wet decorative paper,
- drying the coated decorative paper to a residual moisture content of approx. 6%,
- pressing the dried decorative paper onto a wood fiber board.

11. A method according to claim 10,
**characterized in that**
the at least three grain size fractions of the transparent solid particles are applied onto the decorative paper in a plurality of steps, wherein different grain size fractions or mixtures of different grain size fractions of the resin suspensions comprising transparent solid particles are used, wherein the order of the application of the resin suspensions takes place in such a manner that the uppermost layer of the surface protective layer, which was obtained in this manner, comprises the fine fraction of the transparent solid particles.

12. A use of a surface protection layer according to one of claims 1 to 7 as decorative surface for wear resistant floor coverings, parquet floors, floor laminates, furniture surfaces or work plates.

## Patentansprüche

1. Transparente Oberflächenschutzschicht auf Basis von Kunstharz mit in die Kunstharzmatrix eingelagerten, mindestens drei unterschiedliche Korngrößenfraktionen umfassenden, eine Härte nach Mohs von mindestens 4 aufweisenden, transparenten Feststoffpartikeln, wobei die Korngrößenfraktionen jeweils eine monomodale Korngrößenverteilung aufweisen und die transparenten Feststoffpartikel zusammen als trimodale Korngrößenverteilung mit einer Grobfraktion, einer mittleren Fraktion und einer Feinfraktion vorliegen,
**dadurch gekennzeichnet, dass**
die Grobfraktion eine einzelne oder zwei benachbarte Körnungen mit den Korngrößen F150 bis F280 nach FEPA-Standard umfasst, die mittlere Fraktion eine einzelne oder zwei benachbarte Körnungen mit den Korngrößen F320 bis F1200 nach FEPA-Standard umfasst und die Feinfraktion eine Körnung mit einer mittleren Korngröße d₅₀ von 0.1 µm bis 2 µm umfasst.

2. Oberflächenschutzschicht nach Anspruch 1,
**dadurch gekennzeichnet, dass**
die mittlere Fraktion eine mittlere Korngröße d₅₀ von 5% bis 35% und die Feinfraktion eine mittlere Korngröße d₅₀ von 0.3% bis 3%, jeweils bezogen auf die mittlere Korngröße d₅₀ der Grobfraktion, aufweist.

3. Oberflächenschutzschicht nach Anspruch 1 oder 2,
**dadurch gekennzeichnet, dass**
die mittlere Korngröße d₅₀ der Grobfraktion von 30 µm bis 100 µm, die mittlere Korngröße d₅₀ der mittleren Fraktion von 2 µm bis 20 µm und die mittlere Korngröße d₅₀ der Feinfraktion von 0.2 µm bis 0.5 µm beträgt.

4. Oberflächenschutzschicht nach einem der Ansprüche 1 bis 3,
**dadurch gekennzeichnet, dass**
die transparenten Feststoffpartikel ausgewählt sind aus der Gruppe, bestehend aus α-Aluminiumoxid, Schmelzkorund, Sinterkorund, hochgeglühten Tonerden, Sol-Gel-Korund, Aluminiumsilikat, Glasperlen, Quarzsand und Mischungen davon.

5. Oberflächenschutzschicht nach einem der Ansprüche 1 bis 4,
**dadurch gekennzeichnet, dass**
- die Grobfraktion aus α-Aluminiumoxid oder Schmelzkorund oder einer Mischung von Schmelzkorund oder α-Aluminiumoxid mit bis zu 30 Gew. % Glasperlen,
- die mittlere Fraktion aus α-Aluminiumoxid, Schmelzkorund, hochgeglühten Tonerden, Sol-Gel-Korund oder deren Mischungen und
- die Feinfraktion aus α-Aluminiumoxid, Schmelzkorund, hochgeglühten Tonerden, Aluminiumsilikat, Glasperlen, Quarzsand oder deren Mischungen besteht.

6. Oberflächenschutzschicht nach einem der Ansprüche 1 bis 5,
**dadurch gekennzeichnet, dass**
die transparenten Feststoffpartikel der Grobfraktion und der mittleren Fraktion eine Härte nach Mohs von ≥ 6, vorzugsweise ≥ 8, aufweisen.

7. Oberflächenschutzschicht nach einem der Ansprüche 1 bis 6,
**dadurch gekennzeichnet, dass**
die Gesamtmenge an eingelagerten transparenten Feststoffpartikeln in der Kunstharzmatrix 5 Vol.% bis 70 Vol.%, bezogen auf die gesamte Oberflächenschutzschicht, beträgt.

8. Oberflächenschutzschicht nach einem der Ansprüche 1 bis 7,
**dadurch gekennzeichnet, dass**
die Gesamtmenge an eingelagerten transparenten Feststoffpartikeln in der Kunstharzmatrix 2 g/m² bis 100 g/m² beträgt

9. Verfahren zur Herstellung einer Oberflächenschutzschicht nach einem der Ansprüche 1 bis 8, wobei das Verfahren die Schritte umfasst:
- Kernimprägnieren eines Overlaypapiers mit einer ersten Harzsuspension,
- Auftragen einer die Grobfraktion der transparenten Feststoffpartikel umfassenden zweiten Harzsuspension auf die Vorderseite des nassen Overlaypapiers,
- Auftragen einer die mittlere Fraktion und Feinfraktion der transparenten Feststoffpartikel umfassenden dritten Harzsuspension auf die Rückseite des nassen Overlaypapiers,
- Trocknen des beschichteten Overlaypapiers auf eine Restfeuchte von ca. 6 %,
- Aufbringen des beschichteten Overlaypapiers mit seiner die Grobfraktion der transparenten Feststoffpartikel enthaltenden Seite auf ein mit der ersten Harzsuspension kernimprägniertes und getrocknetes Dekorpapier und
- Verpressen des mit dem beschichteten Overlaypapier belegten Dekorpapiers auf eine Holzfaserplatte, wobei die oberste Schicht der so gebildeten Oberflächenschutzschicht die mittlere Fraktion und Feinfraktion der transparenten Feststoffpartikel umfasst.

10. Verfahren zur Herstellung einer Oberflächenschutzschicht nach einem der Ansprüche 1 bis 8, wobei das Verfahren die Schritte umfasst:
- Kernimprägnieren eines Dekorpapiers mit einer ersten Harzsuspension,
- Auftragen mindestens einer weiteren mindestens eine Korngrößenfraktion der transparenten Feststoffpartikel umfassenden Harzsuspension auf das nasse Dekorpapier,
- Trocknen des beschichteten Dekorpapiers auf eine Restfeuchte von ca. 6 %,
- Verpressen des getrockneten Dekorpapiers auf eine Holzfaserplatte.

11. Verfahren nach Anspruch 10,
**dadurch gekennzeichnet, dass**
die mindestens drei Korngrößenfraktionen der transparenten Feststoffpartikel in mehreren Schritten auf das Dekorpapier aufgetragen werden, wobei unterschiedliche Korngrößenfraktionen oder Mischungen von unterschiedlichen Korngrößenfraktionen der transparenten Feststoffpartikel umfassende Harzsuspensionen eingesetzt werden, wobei die Reihenfolge des Auftragens der Harzsuspensionen so erfolgt, dass die oberste Schicht der so erhaltenen Oberflächenschutzschicht die Feinfraktion der transparenten Feststoffpartikel umfasst.

12. Verwendung einer Oberflächenschutzschicht nach einem der Ansprüche 1 bis 7 als Dekoroberfläche für verschleißfeste Bodenbeläge, Parkettfußböden, Fußbodenlaminate, Möbeloberflächen oder Arbeitsplatten.

## Revendications

1. Une couche de protection de surface transparente à base de résine synthétique contenant des particules solides transparentes, qui comprennent au moins trois fractions de granulométrie différentes et recouvrent une dureté Mohs d'au moins 4, qui sont incorporées dans la matrice de résine synthétique, où les fractions de granulométrie dans chaque cas recouvrent une répartition granulométrique monomodale et les particules solides transparentes sont présentes conjointement sous la forme d'une répartition granulométrique trimodale comprenant une fraction de taille grossière, une fraction de taille moyenne et une fraction de taille fine,
**caractérisée en ce que**
la fraction de taille grossière comprend une granulation individuelle ou deux granulations adjacentes comprenant les granulométries F150 à F280 selon la norme FEPA, la fraction de taille moyenne comprend une granulation individuelle ou deux granulations adjacentes comprenant les granulométries F320 à F1200 selon la norme FEPA et la fraction de taille fine comprend une granulation comprenant une granulométrie moyenne de d₅₀ située entre 0,1 µm et 2 µm.

2. La couche de protection de surface selon la revendication 1,
**caractérisée en ce que**
la fraction de taille moyenne recouvre une granulométrie moyenne d₅₀ située entre 5 % et 35 % et la fraction de taille fine recouvre une granulométrie moyenne d₅₀ située entre 0,3 % et 3 %, dans chaque cas basée sur la granulométrie moyenne d₅₀ de la fraction de taille grossière.

3. La couche de protection de surface selon la revendication 1 ou 2,
**caractérisée en ce que**
la granulométrie moyenne d₅₀ de la fraction de taille grossière se situe entre 30 µm et 100 µm, la granulométrie moyenne d₅₀ de la fraction de taille moyenne se situe entre 2 µm et 20 µm et la granulométrie moyenne d₅₀ de la fraction de taille fine se situe entre 0,2 µm et 0,5 µm.

4. La couche de protection de surface selon l'une quelconque des revendications 1 à 3,
**caractérisée en ce que**
les particules solides transparentes sont choisies dans le groupe se composant d'oxyde d'aluminium α, corindon fondu, corindon fritté, oxydes d'aluminium totalement recuits, corindon sol-gel, silicate d'aluminium, sphères de verre, sable siliceux et des mélanges de ceux-ci.

5. La couche de protection de surface selon l'une quelconque des revendications 1 à 4,
**caractérisée en ce que**
- la fraction de taille grossière se compose d'oxyde d'aluminium α ou de corindon fondu ou d'un mélange de corindon fondu ou d'oxyde d'aluminium α avec jusqu'à 30 % en poids de sphères de verre,
- la fraction de taille moyenne se compose d'oxyde d'aluminium α, de corindon fondu, d'oxydes d'aluminium totalement recuits, de corindon sol-gel ou de mélanges de ceux-ci, et
- la fraction de taille fine se compose d'oxyde d'aluminium α, de corindon fondu, d'oxydes d'aluminium totalement recuits, de silicate d'aluminium, de sphères de verre, de sable quartzeux ou de mélanges de ceux-ci.

6. La couche de protection de surface selon l'une quelconque des revendications 1 à 5,
**caractérisé en ce que**
les particules solides transparentes de la fraction de taille grossière et de la fraction de taille moyenne recouvrent une dureté Mohs ≥ 6, plus particulièrement de préférence ≥ 8.

7. La couche de protection de surface selon l'une quelconque des revendications 1 à 6,
**caractérisé en ce que**
la quantité totale de particules solides transparentes incorporées dans la matrice de résine synthétique se situe entre 5 % en volume et 70 % en volume, basée sur la totalité de la couche de protection de surface.

8. La couche de protection de surface selon l'une quelconque des revendications 1 à 7,
**caractérisé en ce que**
la quantité totale de particules solides transparentes incorporées dans la matrice de résine synthétique se situe entre 2 g/m² et 100 g/m².

9. Un procédé de production d'une couche de protection de surface selon l'une quelconque des revendications 1 à 8, où le procédé comprend les opérations suivantes :
- l'imprégnation à coeur d'un papier overlay avec une première suspension de résine,
- l'application d'une deuxième suspension de résine, qui contient la fraction de taille grossière des particules solides transparentes, sur la face recto du papier overlay humide,
- l'application d'une troisième suspension de résine, qui contient la fraction de taille moyenne et la fraction de taille fine des particules solides transparentes, sur la face verso du papier overlay humide,
- le séchage du papier overlay enduit à une humidité résiduelle d'environ 6%,
- l'application du papier overlay enduit avec sa face qui contient la fraction de taille grossière des particules solides transparentes sur un papier décoratif qui est imprégné à coeur avec la première suspension de résine et qui est séché, et
- le pressage du papier décoratif, qui est revêtu du papier overlay enduit, sur un panneau de fibre de bois, où la couche la plus supérieure de la couche de protection de surface, qui a été formée de cette manière, contient la fraction de taille moyenne et la fraction de taille fine des particules solides transparentes.

10. Le procédé de production d'une couche de protection de surface selon l'une quelconque des revendications 1 à 8, où le procédé comprend les opérations suivantes :
- l'imprégnation à coeur d'une couche décorative avec une première suspension de résine,
- l'application d'au moins une autre suspension de résine, qui contient au moins une fraction de granulométrie des particules solides transparentes, sur le papier décoratif humide,
- le séchage du papier décoratif enduit à une teneur en humidité résiduelle d'environ 6 %,
- le pressage du papier décoratif séché sur un panneau de fibre de bois.

11. Un procédé selon la revendication 10,
**caractérisé en ce que**
les au moins trois fractions de granulométrie des particules solides transparentes sont appliquées sur le papier décoratif dans une pluralité d'opérations, où des fractions de granulométrie différentes ou des mélanges de fractions de granulométrie différentes des suspensions de résine contenant des particules solides transparentes sont utilisées, où l'ordre d'application des suspensions de résine se déroule de sorte que la couche la plus supérieure de la couche de protection de surface, qui a été obtenue de cette manière, contienne la fraction de taille fine des particules solides transparentes.

12. Une utilisation d'une couche de protection de surface selon l'une quelconque des revendications 1 à 7 en tant que surface décorative pour des revêtements de sol résistant à l'usure, des sols en parquet, des laminés pour sols, des surfaces de meubles ou des plans de travail.
